# EUROPEAN PATENT APPLICATION

(11) **EP 4 516 833 A1**
(43) Date of publication of application: **05.03.2025**
(21) Application number: 23194250.9
(22) Date of filing: 30.08.2023
(51) Int. Cl.: C08G 59/40, C08G 59/42, C08L 63/00

(54) **METHOD OF PRODUCING A WIND TURBINE BLADE, A RESPECTIVELY PRODUCED WIND TURBINE BLADE AND A RESIN COMPOSITION SUITABLE FOR USE IN THE PRODUCTION**

(71) Applicant: Siemens Gamesa Renewable Energy A/S, 7330 Brande (DK)
(72) Inventor: Stecher, Harald, 9520 Skørping (DK)
(74) Representative: SGRE-Association

(57) **Abstract**

A resin composition suitable for use in the production of a wind turbine blade or a part of any of the foregoing by means of a vacuum infusion method is described. The resin composition comprises an epoxy component, an amine component further comprising at least one imine functional group, and a polyfunctional (meth)acrylate component. Moreover, a method of producing a wind turbine blade a nacelle or a part of any of the foregoing and a respectively produced wind turbine blade, a nacelle or a part of any of the foregoing are described.

## Description

### Field of invention

The present invention relates to the field of wind turbine blades, in particular to a resin composition suitable for use in a method of producing a wind turbine blade by means of a vacuum infusion method, and a method of producing a wind turbine blade, a nacelle or a part of any of the foregoing.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Various parts of a wind turbine, such as wind turbine blades or nacelles, are typically made of a composite material of glass fiber reinforced polymer resin. A conventionally used method for producing such composite material includes vacuum assisted resin transfer molding (VARTM), wherein a liquid or flowable resin is injected in a mold under application of vacuum. To this end, low viscosity resins are generally used which reduce cycle time of manufacture of parts.

Moreover, recycling and reprocessing of composites becomes a more and more important topic. A potential solution involves Covalent Adaptable Networks (CAN), also called dynamic networks or vitrimers. One of the most promising technologies is Imine based CANs. This technology has, as an example, been patented and marketed by the company Mallinda (see for instance WO 2020/051506 and WO 2022/187451). It is based on easily available known components. The concept builds on imine containing building blocks that are crosslinked by different reactive groups with epoxy groups being the preferred moiety.

However, imine containing hardeners for epoxy resins are bulky molecules with high viscosity. As a result, this system is not suitable for vacuum infusion systems for wind blades because a low enough viscosity combined with long open time and fast cure is not possible to achieve in a feasible way.

Other CAN technologies like disulfide based networks or aza-Michael networks are described in the literature. Disulfide based CANs are of interest, but the necessary hardeners are not industrialized. Aza-Michael based CANs are described in literature (Christian Taplan, Marc Guerre, and Filip E. Du Prez; Journal of the American Chemical Society 2021 143 (24), 9140-9150; DOI: 10.1021/jacs.1c03316) and a reaction product of different acrylate based components and amine components. But the reaction of an (already once reacted) secondary amine with another acrylate is not favored, which impacts the achievable network density. Also the reaction speed is very high and problematic to achieve a good quality vacuum infusion of a large part.

A combination of a small amount of acrylates in an epoxy-amine resin has been described by Dow (WO 2012/148815 A1). The patent application describes the use of few percent (up to 4 %) acrylate in the epoxy part. This reference describes that the reaction product (a secondary amine of a primary amine and an acrylate) is able to further react with an epoxy group forming a tertiary amine.

The imine based CAN technology has not yet been able to be implemented for vacuum infusion, but only for other processes e.g. prepreg processes. Other CAN technologies are not yet commercially available and have not been able to deliver the desired and required set of properties for application in vacuum infusion of wind blades.

Thus, there may be a need for an implementation of imine based CAN technology for vacuum infusion, in particular for an imine based resin composition having an appropriate (in particular sufficiently low) viscosity allowing its use in a vacuum infusion method for the production of wind turbine blades or other parts of a wind turbine.

### Summary of the Invention

This need may be met by the subject matter according to the independent claims. Advantageous embodiments of the present invention are described by the dependent claims.

According to an aspect of the invention, there is provided a resin composition (suitable for use in the production of a wind turbine blade or a part thereof by means of a vacuum infusion method) comprising an epoxy component, an amine component further comprising at least one imine functional group, and a polyfunctional (meth)acrylate component (comprising two or more (meth)acrylate functional groups).

According to a further aspect of the invention, there is provided a method of producing a wind turbine blade, a nacelle or a part of any of the foregoing, the method comprising applying a resin composition as described herein into a mold by a vacuum infusion method, in particular vacuum assisted resin transfer molding, and curing the resin composition.

According to a further aspect of the invention, there is provided a wind turbine blade, a nacelle or a part of any of the foregoing obtainable (or obtained) by a method as described herein.

These aspects of the invention are in particular based on the finding that the problems of imine based epoxy-amine resin systems with viscosity and reactivity may be solved by a partial replacement of the epoxy components by (meth)acrylates, more specifically polyfunctional (meth)acrylates. Without wishing to be bound to any theory, the inventor assumes that (meth)acrylates replacing a part of the epoxy-resin may further contribute to a reduction of the viscosity and since the reactivity of (meth)acrylates is higher compared to epoxy groups the overall reaction speed can be increased and at the same time the peak temperature of the exotherm reaction can be reduced.

The combination of imine groups in the amine hardener backbone and aza-Michael adduct formed in the polymerization reaction between acrylates and amines introduces two dynamic moieties:
a) The imine groups exhibit an associative or dissociative dynamic mechanism as shown in the following exemplary reaction schemes: 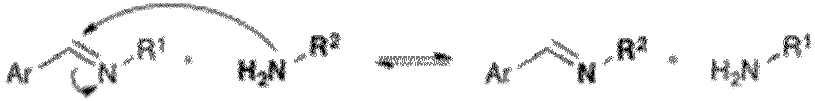 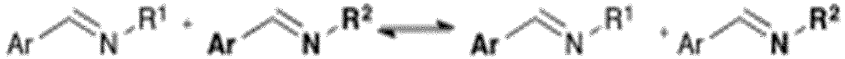 wherein Ar represents an aromatic moiety and R1 and R2 stand for arbitrary residues
b) The aza-Michael adduct exhibits a dissociative dynamic mechanism via a retro-aza-Michael reaction as shown in the following exemplary reaction scheme: 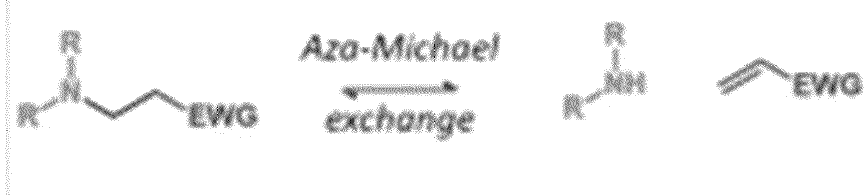
wherein EWG represents an electron-withdrawing group and R stands for an arbitrary residue.

There is a synergistic effect because the amine groups released in the retro-aza-Michael reaction will increase the free amine groups in the network, which then can interact with the imine groups (which is a very fast exchange reaction). The additional dynamic mechanism allows for the partial replacement of the bulky imine-containing hardener molecules with much lower viscous amine hardeners, e.g. polyetheramines like Jeffamine D-230 or IPDA depending on the desired enhanced properties aside viscosity.

The combination of the different reactions and mechanisms broadens the spectrum of applicable components and allows much better fine tuning to overcome the intrinsic problems of each separate technology. As a result, better control of curing, better adjustment of viscosity and tunability of the bond exchange kinetics becomes possible.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a resin composition may be combined with any other exemplary embodiment of a resin composition and with any exemplary embodiment of a method of producing a wind turbine blade, a nacelle or a part of any of the foregoing and with any exemplary embodiment of a wind turbine blade, a nacelle or a part of any of the foregoing and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a resin composition is provided. The resin composition may in particular be suitable for use in a vacuum infusion method and may therefore also be referred to as an infusion resin. Moreover, the resin composition may in particular be suitable for use in the production of a wind turbine blade, a nacelle or a part of any of the foregoing or any other part of a wind turbine comprising a composite material of glass fiber reinforced polymer resin.

The term "composition", as used herein, may in particular mean that the components (ingredients) of the composition are in close proximity with each other and/or that the components are (intensely) mixed with each other, for instance by using a mixer, a stirrer and/or by shaking, to thereby form the composition. In particular, the components of the compositions may be uniformly distributed or dispersed throughout within the composition. The composition may be in particular semi-solid (pasty) or liquid, in particular a liquid solution or a semi-solid or liquid suspension.

The term "resin composition", as used herein, may in particular mean that the composition comprises or (substantially) consists of resins or resin components which may undergo a chemical reaction (e.g. polymerization or crosslinking reaction) with some of each other, thereby curing or hardening, typically induced by thermal energy (e.g. heating) or irradiation with electromagnetic radiation.

The resin composition comprises an epoxy component. The epoxy component is not particularly limited and any suitable example thereof customary in the field of epoxy-amine infusion resins may be used. The epoxy component is in particular characterized in that it comprises one or more epoxide functional groups.

In an embodiment, the epoxy component is selected from the group consisting of glycidyl ethers, glycidyl esters, glycidyl amines, divinylbenzene dioxide, cycloaliphatic epoxides, and combinations thereof.

The resin composition also comprises an amine component. The amine component is characterized in that it further comprises - in addition to one or more amine functional groups - at least one imine functional group, i.e. a functional group containing a carbon-nitrogen double bond. By comprising at least one imine functional group, the amine component is capable of undergoing an imine bond exchange reaction, thereby contributing to a covalent adaptable network.

In an embodiment, the amine component comprises one, two or three imine functional groups.

In an embodiment, the amine component is selected from the group consisting of aliphatic polyamines, arylaliphatic polyamines, cycloaliphatic polyamines, alkanolamines, polyetherpolyamines, and combinations thereof, wherein each component further comprises at least one imine functional group.

The resin composition also comprises a polyfunctional (meth)acrylate component. The polyfunctional (meth)acrylate component is in particular characterized in that it comprises two or more (meth)acrylate functional groups. A polyfunctional acrylate component, i.e. comprising two or more acrylate functional groups, is preferred, but a polyfunctional methacrylate component, i.e. comprising two or more methacrylate functional groups, may also be used. It may also be possible to use a mixed polyfunctional (meth)acrylate component comprising one or more acrylate functional groups and one or more methacrylate functional groups.

A "(meth)acrylate" encompasses an acrylate and/or a methacrylate. The terms "acrylate" and "methacrylate" as used herein, correspond to the generally accepted meanings thereof. An acrylate may be represented by the general formula "H2C=CH-C(=O)-" and a methacrylate may be represented by the general formula "H2C=C(CH3)-C(=O)-". An acrylate may also encompass an itaconate.

In an embodiment, the polyfunctional (meth)acrylate component comprises two or three (meth)acrylate functional groups.

In an embodiment, the polyfunctional (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidlyether, trimethylolpropane triacrylate and combinations thereof.

In an embodiment, a weight ratio of the polyfunctional (meth)acrylate component to the epoxy component is in a range of from 1:9 to 1:1. In other words, 10 to 50 wt.-% of the epoxy component may be replaced by the polyfunctional (meth)acrylate component. In particular in case of a high amount of the polyfunctional (meth)acrylate compared to the amount of the epoxy component, at least a part of the bulky amine component comprising at least one imine functional group may be replaced by a conventional amine hardener, which allows to obtain a resin composition with lower viscosity, which is highly advantageous - if not necessary - when applied in a vacuum infusion method.

In an embodiment, a molar ratio of the polyfunctional (meth)acrylate component to the epoxy component is in a range of from 1:9 to 1:1. In other words, in this embodiment, 10 to 50 mol.-% of the epoxy component is replaced by the polyfunctional (meth)acrylate component.

In an embodiment, a (weight or molar) ratio of the polyfunctional (meth)acrylate component to the epoxy component is in a range of from 1:5 to 1:2.

In an embodiment, the resin composition further comprises an amine hardener. In particular, the amine hardener may be an amine component not comprising at least one imine functional group, i.e. a conventional amine hardener in the field of epoxy-amine infusion resins, such as isophorone diamine (IPDA) or a polyetheramine like Jeffamine D-230. Due to the partial replacement of the epoxy component with the polyfunctional (meth)acrylate component, in particular in cases of higher amounts of the polyfunctional (meth)acrylate component, such conventional amine hardeners may replace a part of the amine component comprising at least one imine functional group, which provides the advantage of lowering the viscosity of the resin composition.

In an embodiment, the resin composition has a viscosity of less than 300 mPa·s at 25 °C. In particular, the resin composition may have a viscosity of less than 200 mPa·s at 25 °C, preferably less than 150 mPa·s at 25 °C. The resin composition may have a viscosity of more than 50 mPa·s at 25 °C. The viscosity of the resin composition or infusion resin may be determined for instance using a falling-ball viscometer in accordance with ISO 12058-1:2018. It has been surprisingly turned out that such a low viscosity can be achieved - despite the use of bulky and highly viscous amine hardeners comprising at least one imine functional group - by the technique as described herein, in particular by partially replacing an epoxy component with a polyfunctional (meth)acrylate component.

The resin composition according to the first aspect may be advantageously used in a method according to the second aspect as described below.

In a second aspect, a method of producing a wind turbine blade, a nacelle or a part of any of the foregoing is provided.

In the method, a resin composition as described herein is applied, in particular injected, into a mold by a vacuum infusion method. In the context of the present specification, the term "vacuum infusion method" may in particular denote a molding technique wherein a liquid or flowable resin is injected in a mold under application of vacuum. In particular, vacuum assisted resin transfer molding (VARTM) may be used. The infusion resin may in particular be a liquid or flowable composition comprising components, typically at least two different types of components, that may react with each other to thereby form a cured or hardened product.

In an embodiment, the resin composition (before its application) has a viscosity of less than 300 mPa·s at infusion temperature (such as at 25°C), in particular less than 150 mPa·s, such as less than 100 mPa·s. Such low-viscosity resins are advantageous in terms of a reduced cycle time of manufacture of products by vacuum infusion method. As explained above, imine-based epoxy amine resin compositions having such a low viscosity may be achieved by partially replacing the epoxy component with a polyfunctional (meth)acrylate component.

The mold, into which the resin composition is applied, typically forms a cavity and may therefore also be designated as mold cavity. The mold may be adapted to an outline of the turbine blade, the nacelle or a part of any of the foregoing to be produced.

In an embodiment, the step of curing the resin composition comprises heating the resin composition to a temperature in the range of from 60 to 150 °C, in particular 70 to 120 °C.

In an embodiment, the method further comprises, after curing the resin composition, removing the mold to thereby obtain the produced wind turbine blade, nacelle or the part thereof.

In a further aspect, a wind turbine blade, a nacelle or a part of any of the foregoing is obtainable or is obtained by a method as described in the foregoing.

While the present invention has been described in detail by way of specific embodiments and examples, it should be appreciated the invention is not limited thereto and various alterations and modifications are possible, without departing from the scope of the invention.

## Claims

1. A resin composition comprising:
an epoxy component;
an amine component further comprising at least one imine functional group;
a polyfunctional (meth)acrylate component.

2. The resin composition as set forth in claim 1, wherein the epoxy component is selected from the group consisting of glycidyl ethers, glycidyl esters, glycidyl amines, divinylbenzene dioxide, cycloaliphatic epoxides, and combinations thereof.

3. The resin composition as set forth in any one of the preceding claims, wherein the amine component comprises one, two or three imine functional groups.

4. The resin composition as set forth in any one of the preceding claims, wherein the amine component is selected from the group consisting of aliphatic polyamines, arylaliphatic polyamines, cycloaliphatic polyamines, alkanolamines, polyetherpolyamines, and combinations thereof, wherein each component further comprises at least one imine functional group.

5. The resin composition as set forth in any one of the preceding claims, wherein the polyfunctional (meth)acrylate component comprises two or three (meth)acrylate functional groups.

6. The resin composition as set forth in any one of the preceding claims, wherein the polyfunctional (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidlyether, trimethylolpropane triacrylate and combinations thereof.

7. The resin composition as set forth in any one of the preceding claims, wherein a weight ratio of the polyfunctional (meth)acrylate component to the epoxy component is in a range of from 1:9 to 1:1.

8. The resin composition as set forth in any one of the preceding claims, wherein the resin composition further comprises an amine hardener.

9. The resin composition as set forth in any one of the preceding claims, wherein the resin composition has a viscosity of less than 300 mPa·s at 25 °C.

10. The resin composition as set forth in any one of the preceding claims, wherein the resin composition has a viscosity of less than 150 mPa·s at 25 °C.

11. A method of producing a wind turbine blade, a nacelle or a part of any of the foregoing, the method comprising:
applying a resin composition according to any of the preceding claims into a mold by a vacuum infusion method, in particular vacuum assisted resin transfer molding,
curing the resin composition.

12. The method as set forth in claim 11, wherein the infusion resin has a viscosity of less than 300 mPa·s at infusion temperature.

13. The method as set forth in any one of claims 11 or 12, wherein the step of curing the resin composition comprises heating the resin composition to a temperature in the range of from 60 to 150 °C, in particular 70 to 120 °C.

14. The method as set forth in any one of claims 11 to 13, wherein the method further comprises, after curing the resin composition, removing the mold.

15. A wind turbine blade, a nacelle or a part of any of the foregoing obtainable by a method according to any one of claims 11 to 14.
